# EUROPÄISCHE PATENTSCHRIFT

(11) **EP 2 625 120 B1**
(45) Veröffentlichungstag und Bekanntmachung des Hinweises auf die Patenterteilung: **01.04.2015**
(21) Anmeldenummer: 12772105.8
(22) Anmeldetag: 10.10.2012
(51) Int. Cl.: B65D 85/804

(54) **PORTIONSKAPSEL ZUR HERSTELLUNG EINES GETRÄNKS MIT EINER PORTIONSKAPSEL**
PORTION CAPSULE FOR PRODUCING A BEVERAGE WITH A PORTION CAPSULE
CAPSULE DOSETTE PERMETTANT DE PRÉPARER UNE BOISSON AVEC UNE CAPSULE DOSETTE

(30) Priorität: 13.10.2011 DE 102011115833
(43) Veröffentlichungstag der Anmeldung: 14.08.2013
(73) Patentinhaber: K-fee System GmbH, 51469 Bergisch Gladbach (DE)
(72) Erfinder: KRÜGER, Marc, 51467 Bergisch Gladbach (DE); EMPL, Günter, 51429 Bergisch Gladbach (DE)
(74) Vertreter: Loock, Jan Pieter
(86) Internationale Anmeldenummer: PCT/EP2012/070059
(87) Internationale Veröffentlichungsnummer: WO 2013/053757

(56) Entgegenhaltungen:
- EP-A1- 0 512 468
- EP-A1- 2 100 824
- US-A- 2 926 088
- US-A1- 2008 299 262
- US-A1- 2010 239 717

## Beschreibung

### Stand der Technik

Die vorliegende Erfindung betrifft eine Portionskapsel zur Herstellung eines Getränks, aufweisend einen Kapselkörper mit einem Kapselboden und einer Einfüllseite, wobei zwischen dem Kapselboden und der Einfüllseite ein Hohlraum zur Aufnahme eines pulverförmigen oder flüssigen Getränkesubstrats ausgebildet ist und wobei zwischen dem Getränkesubstrat und dem Kapselboden ein Filterelement angeordnet ist.

Solche Portionskapseln sind aus dem Stand der Technik allgemein bekannt. Beispielsweise sind in den Druckschiften EP 1792850 B1, EP 1344722 A1 und US 2003/0172813 A1 gattungsgemäße Portionskapseln zur Kaffee- und Espressozubereitung offenbart.

Derartige Portionskapseln zur Herstellung eines Getränkes sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise eine offene Einfüllseite mit einem Kragenrand, auf den eine Deckelfolie aufgesiegelt oder aufgeklebt wird, einen geschlossenen Kapselboden, wobei zwischen dem Getränkesubstrat und dem Kapselboden ein sich gegen den Kapselboden abstützendes Partikelsieb angeordnet ist. Diese Siebe sind entweder aus einem thermoplastischen Kunststoff gespritzt oder aus einer Kunstofffolie tiefgezogen oder geprägt.

Für die Zubereitung eines Kaffeegetränkes wird die Portionskapsel in eine Brühkammer eines Zubereitungsgerätes eingebracht. Nach oder während des Schließvorganges der Brühkammer wird die Kapsel bevorzugt auf ihrer geschlossenen Bodenseite mittels eines in der Brühkammer angeordneten Ablaufdornes geöffnet und nach dem Abdichten der Brühkammer wird die mit einer Verschlussfolie verschlossene Einfüllseite der Portionskapsel mittels Einstechmitteln angestochen. Anschließend wird Zubereitungsflüssigkeit, vorzugsweise heißes Wasser, unter Druck in die Portionskapsel gefördert. Die Zubereitungsflüssigkeit durchströmt das Getränkesubstrat und extrahiert und/oder löst die für die Getränkeherstellung benötigten Stoffe aus dem Getränkesubstrat aus. Für die Zubereitung eines Espresso wirkt zum Extrahieren der ätherischen Öle beispielsweise ein Brühwasserdruck von bis zu 20 bar auf das Kaffepulver. Dieser Druck wirkt ferner auch auf das zwischen dem Kaffeepulver und dem Kapselboden und vor dem eingestochenen Kapselauslauf liegende Filtermedium ein.

Der plötzliche Druckverlust auf der Unterseite des Filtermediums führt zur Schaumbildung im Getränk, beispielsweise in Form einer Crema eines Kaffeegetränks. Für bestimmte Getränke, beispielsweise den klassischen Filterkaffee ohne Crema, welcher insbesondere in den USA & Skandinavien konsumiert wird, ist eine Schaumbildung jedoch unerwünscht.

### Offenbarung der Erfindung

Es war deshalb die Aufgabe der vorliegenden Erfindung, eine Portionskapsel mit einer Filteranordnung zur Verfügung zu stellen, bei welcher eine im Vergleich zum Stand der Technik reduzierte bis nahezu keine Schaumbildung erzielt wird oder bei welcher eine Schaumbildung komplett vermieden wird, auch wenn die Portionskapsel in einer Hochdruck-Extraktionsmachine extrahiert wird.

Gelöst wird diese Aufgabe mit einer Portionskapsel zur Herstellung eines Getränks, aufweisend einen Kapselkörper mit einem Kapselboden und einer Einfüllseite, wobei zwischen dem Kapselboden und der Einfüllseite ein Hohlraum zur Aufnahme eines pulverförmigen oder flüssigen Getränkesubstrats ausgebildet ist, wobei zwischen dem Getränkesubstrat und dem Kapselboden ein Filterelement angeordnet ist, wobei das Filterelement ein offenporiges Vlies und/oder Filz umfasst und wobei der Filz und/oder das Vlies ferner in einem dem Getränkesubstrat zugewandten ersten Bereich eine mittlere erste Porengröße und in einem dem Kapselboden zugewandten zweiten Bereich eine mittlere zweite Porengröße aufweist, wobei die erste Porengröße kleiner als die zweite Porengröße ist.

In vorteilhafter Weise ist es mit der erfindungsgemäßen Portionskapsel im Vergleich zum Stand der Technik erstmals möglich, einen Crema freien Filterkaffee mit einer Hochdruck-Kaffeemaschine (mit Extraktionsdrücken bis zu 20 bar) zu erzeugen. Insbesondere ist somit erstmals auch die Herstellung von Crema freien Filterkaffee mittels einer Hochdruck-Portionskapselmaschine möglich. Diese Vorteile werden dadurch erreicht, dass die Extraktionsflüssigkeit sich beim Durchtritt durch das Filterelement bereits entspannen kann, so dass kein abrupter Druckverlust an der Unterseite des Filterelements auftritt. Die Schaumbildung wird somit im Vergleich zum Stand der Technik erheblich reduziert bzw. in Abhängigkeit vom Kaffee und seines Mahlgrads vollständig verhindert. Gleichzeitig wird eine geringe Porengröße auf der der Getränkesubstanz zugewandten Seite ermöglicht, so dass hierdurch eine effektive Filterung erzielt wird und keine Feinpartikel aus der Kapsel in das Getränk geschwemmt werden, welche beispielsweise zu einer unerwünschten Verunreinigung des Getränks führen würden. Die Portionskapsel im Sinne der vorliegenden Erfindung umfasst eine hermetisch dichte Portionskapsel. Dies bedeutet, dass das in der Portionskapsel befindliche Getränke- oder Lebensmittelpulver, beispielsweise Kaffeepulver, Suppenpulver oder Tee, vor dem Extraktionsvorgang im Wesentlichen aromadicht gegenüber der Umwelt verschlossen ist. Das Filterelement umfasst vorzugsweise eine, zwei oder drei Trägerschichten, welche zur Bildung des Filzes entsprechend vernadelt bzw. verfilzt sind. Eine Hochdruck-Portionskapselmaschine im Sinne der vorliegenden Erfindung umfasst insbesondere eine Portionskapselmaschine, die einen Druck von bis 20 bar aufbauen kann. Eine solche Hochdruck-Portionskapselmaschine ist dann beispielsweise auch in der Lage bei Verwendung von konventionellen Portionskapseln, d.h. nicht erfindungsgemäßen Portionskapseln, Espresso und Kaffee mit Crema herzustellen. Denkbar ist, dass das Filterelement aus einem Vlies- oder Filzmaterial ohne differenzierte Schichten ausgebildet ist. Mit anderen Worten: Zwischen dem ersten und dem zweiten Bereich sind keine klaren Trennschichten, sondern ein undefinierter Übergang gegeben.

Gemäß einer weiteren Ausführungsform der vorliegenden Erfindung ist vorgesehen, dass das Filterelement eine Trägerschicht aufweist, wobei die Trägerschicht auf der der Getränkesubstanz zugewandten Seite und auf der dem Kapselboden zugewandten Seite eine unterschiedliche Verfilzung und/oder unterschiedliche Fasern und/oder Fasern mit unterschiedlichen Faserdicken und/oder unterschiedliche Wärmebehandlung aufweist. In vorteilhafter Weise ist somit eine vergleichsweise einfache und kostengünstige Herstellung des Filterelements mit den zwei unterschiedlichen Porengrößen aufweisenden ersten und zweiten Bereich möglich

Gemäß einer weiteren Ausführungsform der vorliegenden Erfindung ist vorgesehen, dass das Filterelement eine erste Filzschicht und eine zweite Filzschicht aufweist, wobei die erste Filzschicht auf einer dem Getränkesubstrat zugewandten Seite des Filterelements angeordnet ist und wobei die zweite Filzschicht auf einer dem Kapselboden zugewandten Seite des Filterelements angeordnet ist, wobei die erste Filzschicht im Mittel die erste Porengröße und die zweite Filzschicht im Mittel die zweite Porengröße aufweist. In vorteilhafter Weise wird das Filterelement mit den zwei unterschiedlichen Porengrößen durch die Verwendung zweier unterschiedlicher Filzschichten besonders einfach realisiert. Die beiden Filzschichten liegen vorzugsweise locker aufeinander auf oder sind fest miteinander verbunden, beispielsweise sind die beiden Schicht miteinander vernadelt, verwebt, verklebt und/oder verschweißt.

Gemäß einer weiteren Ausführungsform der vorliegenden Erfindung ist vorgesehen, dass der Filz im ersten Bereich und/oder die erste Filzschicht aus Fasern mit einem durchschnittlichen ersten Faserdurchmesser gebildet ist und wobei der Filz im zweiten Bereich und/oder die zweite Filzschicht aus Fasern mit einem durchschnittlichen zweiten Faserdurchmesser gebildet ist, wobei der erste Faserdurchmesser im Mittel kleiner als der zweite Faserdurchmesser ist. Mittels unterschiedlicher Faserdurchmesser ist in vorteilhafter Weise eine einfache Realisierung der unterschiedlichen Porendurchmesser zu erzielen.

Gemäß einer weiteren Ausführungsform der vorliegenden Erfindung ist vorgesehen, dass der Filz einen aus Kunststoff-Feinfasern, beispielsweise Polyester-Feinfasern, hergestellten Filzstoff umfasst, welcher insbesondere ein Wirrfaser- und/oder faserorientierter-Filzstoff ist. Der Filz umfasst bevorzugt eine Massenbelegung (auch als Grammatur oder Flächengewicht bezeichnet) zwischen 40 und 1600 Gramm pro Quadratmeter, besonders bevorzugt zwischen 200 und 900 Gramm pro Quadratmeter, und ganz besonders bevorzugt, von im Wesentlichen 650 Gramm pro Quadratmeter auf. Alternativ ist ganz besonders bevorzugt ein Filz mit einer Massenbelegung von im Wesentlichen 1150 Gramm pro Quadratmeter vorgesehen. Der Filz weist bevorzugt eine Dicke zwischen 0,20 und 5 Millimetern, besonders bevorzugt zwischen 1,5 und 3,5 Millimetern, und ganz besonders bevorzugt, von im Wesentlichen 3,2 Millimetern auf. Der Filz ist derart ausgebildet, dass die Luftdurchlässigkeit des Filzes bei 100 Pascal bevorzugt zwischen 200 und 3000 l/(m²s), besonders bevorzugt zwischen 200 und 1000 (l/m²s) und ganz besonders bevorzugt, im Wesentlichen bei 600 l/(m²s) liegt. Es hat sich in überraschender und nicht vorhersehbarer Weise gezeigt, dass mit derartigen Filzstoffen optimale Ergebnisse hinsichtlich Extraktionseffizienz, Durchmisch- und Abfließverhalten, sowie Verstopfungsresistenz zu erzielen sind.

Vorzugsweise wird der Filz so auf dem Boden der Kapsel angeordnet dass er möglichst großflächig anliegt. Besonders bevorzugt wird der Filz an den Boden gesiegelt, insbesondere durch Ultraschall.

Gemäß einem weiteren Gegenstand oder einer weiteren Ausführungsform der vorliegenden Erfindung weist das Filterelement eine Filzstruktur auf. Insbesondere handelt es sich dabei um eine Nadelfilzstruktur. Vorzugsweise besteht das Filterelement aus mindestens einer Filzstruktur und einer Trägerstruktur, insbesondere einer Gewebestruktur, wobei, besonders bevorzugt die Filzstruktur, zumindest in einen Teilabschnitt des Volumens, die Trägerstruktur umfasst. Vorzugsweise weist das Filterelement zwei Filzstrukturen auf, die durch die Trägerstruktur voneinander getrennt sind. Die Dicke der beiden Filzstrukturen kann gleich oder unterschiedlich sein. Vorzugsweise ist eine dem Pulver oder Tee zugewandte Filzstruktur dünner als die dem Kapselboden zugewandte Filzstruktur oder umgekehrt. Vorzugsweise wird die Oberfläche der Filzstruktur behandelt, beispielsweise wärmebehandelt, um beispielsweise lose Fasern zu fixieren. Vorzugsweise wird das eine Filzstruktur aufweisende Filterelement lediglich in die Kapsel, insbesondere auf deren Boden, eingelegt. Beim Perforieren kann das Perforationsmittel in dieses Filterelement eindringen. Vorzugsweise werden mehrere Filterelemente, die eine oder mehrere Filzstrukturen und eine Trägerstruktur aufweisen, in der Kapsel übereinander angeordnet, vorzugsweise miteinander verbunden.

Gemäß einer weiteren bevorzugten Ausführungsform der vorliegenden Erfindung, weist die Portionskapsel eine Öffnung im Kapselboden auf. Auf der Außenseite des Kapselbodens ist eine die Öffnung bedeckende Dichtfolie angebracht. Die Dichtfolie kann vor dem Eingeben der Portionskapsel in die Portionskapselmaschine von einem Benutzer entfernt, insbesondere abgezogen werden. Alternativ ist denkbar, dass die Dichtfolie in der Brühkammer mittels eines Perforationsmittels perforiert wird oder beim Einleiten der Extraktionsflüssigkeit in die Portionskapsel auf- bzw. abplatzt. Vorteilhafterweise wird durch die Öffnung im Kapselboden der Druckaufbau im Kapselinneren reduziert, so dass ein nahezu cremafreier Kaffee herstellbar ist. Die Öffnung ist insbesondere zentral im Kapselboden angeordnet und weist einen maximalen Durchmesser zwischen 5 und 15 Millimeter, vorzugsweise zwischen 10 und 14 Millimeter und besonders bevorzugt von im Wesentlichen 12 Millimetern auf. Die Dichtfolie weist vorzugsweise eine nicht fest mit dem Kapselboden verbundene Abziehlasche auf, um einem Benutzer das manuelle Entfernen der Dichtfolie zu erleichtern. Die Dichtfolie ist vorzugsweise an den Kapselboden geklebt.

Ein weiterer Gegenstand der vorliegenden Erfindung ist das Verfahren zur Herstellung eines Getränkes, wobei im ersten Schritt die erfindungsgemäße Portionskapsel bereitgestellt wird, wobei in einem zweiten Schritt die Portionskapsel in eine Brühkammer eingelegt wird und wobei in einem dritten Schritt zur Herstellung des Getränks eine Zubereitungsflüssigkeit mit einem Druck von bis zu 20 bar in die Portionskapsel eingeleitet wird. Bevorzugt ist die Portionskapsel derart ausgebildet, dass sich während des Extraktionsvorgangs innerhalb der Portionskapsel ein Druck zwischen 2 und 14 bar, vorzugsweise zwischen 4 und 8 bar und besonders bevorzugt 6 bar aufbaut.

Ein weiterer Gegenstand der vorliegenden Erfindung ist die Verwendung einer Portionskapsel zur Herstellung eines Getränks, vorzugsweise zur Herstellung eines Kaffee- und/oder Teegetränks.

Ausführungsbeispiele der Erfindung sind in den Figuren dargestellt und in der nachfolgenden Beschreibung näher erläutert. Die Figuren sind lediglich beispielhaft beschrieben und schränken den allgemeinen Erfindungsgedanken nicht ein.

### Figurenbeschreibung

- **Figur 1**: zeigt einen Längsschnitt durch eine Portionskapsel gemäß einer beispielhaften Ausführungsform der vorliegenden Erfindung, die für die Zubereitung von Kaffee eingerichtet ist.
- **Figur 2**: zeigt einen Längsschnitt durch eine in einer geschlossenen Brühkammer liegende Portionskapsel gemäß der beispielhaften Ausführungsform der vorliegenden Erfindung.
- **Figuren 3a, 3b**: zeigen zwei unterschiedliche Ausführungsformen des Filterelementes der Portionskapsel gemäß der beispielhaften Ausführungsform der vorliegenden Erfindung.

In den verschiedenen Figuren sind gleiche Teile stets mit den gleichen Bezugszeichen versehen und werden daher in der Regel auch jeweils nur einmal benannt bzw. erwähnt.

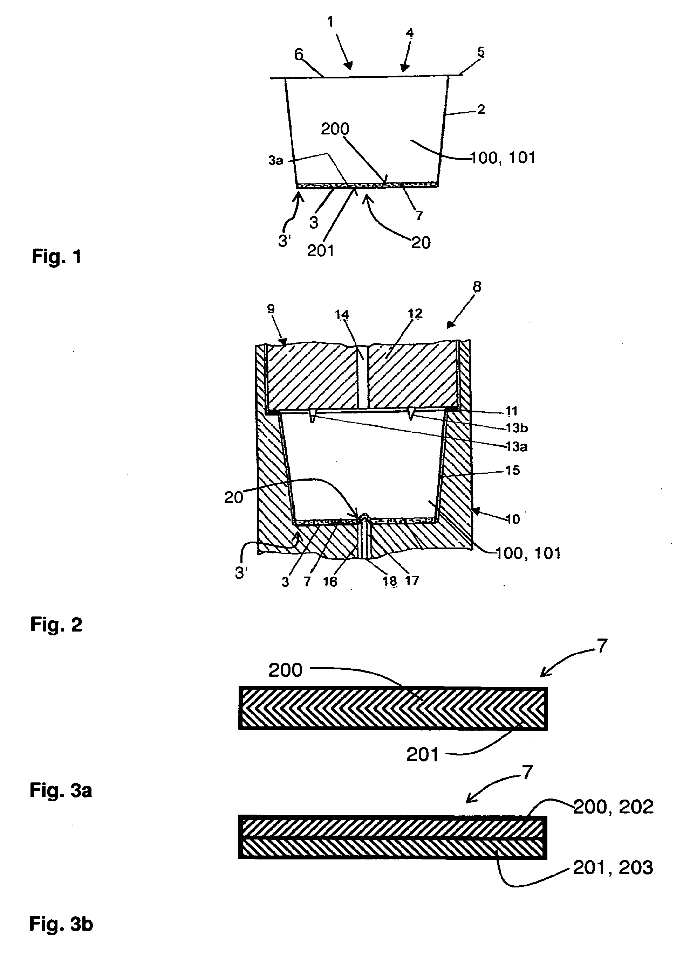

In **Figur 1** ist eine beispielshaften Ausführungsform der erfindungsgemäßen Portionskapsel 1 dargestellt. Die Portionskapsel 1 umfasst einen kegelstumpfförmigen Kapselkörper 2 mit einem Kapselboden 3 und mit einem an seiner Einfüllseite 4 angeordneten Kragenrand 5, auf den eine Deckelfolie 6 aufgeschweißt oder geklebt ist. Der Kapselboden 5 ist im Ausgangszustand entweder geschlossen oder weist in seinem Ausgangszustand schon eine Austrittsöffnung 20 auf, welche im beispielsweise mittels einer vor dem Extraktionsvorgang abziehbaren oder in der Brühkammer perforierbaren Dichtfolie (nicht dargestellt) abgedichtet ist. Zwischen dem Kapselboden 3 und der Deckelfolie 6 ist somit ein, im Ausgangszustand der Portionskapsel 1 vorzugsweise luft- und aromadicht verschlossener Hohlraum 100, ausgebildet, welcher mit einer pulver- und granulatförmigen Getränkesubstanz 101 gefüllt ist. Die Getränkesubstanz 101 umfasst dabei beispielsweise ein Kaffee- und/oder Teegranulat. Auf der Innenseite 3a des Kapselbodens 3, d.h. innerhalb des Hohlraums 100, ist ein Filterelement 7, bestehend aus einem Filz angeordnet. Der Filz liegt entweder lose auf der Innenseite 3a des Kapselbodens 3 auf oder ist fest, d.h. vorzugsweise stoffschlüssig, mit der Innenseite 3a des Kapselkörperbodens 3 verbunden. In der zweiten Variante ist das Filterelement 7 insbesondere nur in einem Randbereich 3' des Kapselbodens 3 am Kapselboden 3 stoffschlüssig befestigt. Der Filz umfasst vorzugsweise einen aus Polyester-Feinfasern hergestellten Filzstoff. Das Filterelement 7 wird vorzugsweise mittels Stanzen, Laserschnitt, Wasserstrahlschnitt, Ultraschallschnitt und/oder dergleichen aus einer Gewebebahn herausgetrennt.

Der Filz weist ferner einen der Getränkesubstanz 101 zugewandten ersten Bereich 200 und einen dem Kapselboden 3 zugewandten zweiten Bereich 201 auf. Im ersten Bereich 200 weist der Filz im Mittel eine erste Porengröße auf, während der Filz im zweiten Bereich 201 im Mittel eine zweite Porengröße aufweist. Die erste Porengröße ist dabei kleiner als die zweite Porengröße. Das durch das Filterelement 7 hindurchtretende Getränk kann sich somit schon im zweiten Bereich 201 und somit innerhalb des Filterelements 7 beginnen zu entspannen, so dass der plötzliche Druckabfall am unteren Rand des Filz geringer ausfällt und die Schaumbildung reduziert wird. In einzigartiger Weise wird somit bei einer Extraktion der Portionskapsel 1 in einer Hochdruck-Kaffeemaschine, welche beispielsweise in einem Druckbereich von bis zu 20 bar arbeitet, die Bildung einer Crema auf dem Kaffee vollständig verhindert oder zumindest deutlich reduziert ist.

Denkbar ist, dass der Filz zur Erzielung der zwei unterschiedlichen Bereiche 200, 201 mit unterschiedlicher Porengröße ein Trägermaterial umfasst, welches im ersten Bereich 200 und im zweiten Bereich 201 unterschiedlich stark vernadelt und/oder im ersten Bereich 200 und im zweiten Bereich 201 mit unterschiedlichen Fasern verfilzt wird. Vorzugsweise wird der Filz auf der der Getränkesubstanz 101 zugewandten Seite stärker vernadelt, als auf der dem Kapselboden 3 zugewandten Seite, so dass die Porengröße auf der der Getränkesubstanz 101 zugewandten Seite im Mittel geringer ist.

In **Figur 2** ist eine Portionskapsel 1 gemäß der in Figur 1 illustrierten beispielshaften Ausführungsform der vorliegenden Erfindung dargestellt, wobei die Portionskapsel 1 in der Figur 2 in einer geschlossenen Brühkammer 8 angeordnet ist. Die Brühkammer 8 besteht aus einem ersten Brühkammerelement 9 und einem zweiten Brühkammerelement 10, wobei das erste Brühkammerelement 9 zur Einführung der Portionskapsel 1 beweglich gegenüber dem zweiten Brühkammerelement 10 oder umgekehrt vorgesehen ist. Zwischen den beiden Brühkammerelementen 9, 10 ist eine Dichtung 11 angeordnet. Das erste Brühkammerelement 9 besteht im Wesentlichen aus einem Schließkolben 12 mit Einstechelementen 13a, 13b zur Öffnung der Deckelfolie 6 der Portionskapsel 1, einer Zubereitungsflüssigkeitszuführung 14 und der Dichtung 11. Das zweite Brühkammerelement 10 besteht im Wesentlichen aus einer die Portionskapsel 1 teilweise umschließenden Brühkammerglocke 15 mit einem am Boden der Brühkammerglocke 15 angeordneten Ablaufdorn 16, der mit Ablaufrillen 17 versehen ist, und einem Getränkeablauf 18. Zur Aufnahme der Portionskapsel 1 befindet sich die Brühkammer 8 in einem nicht dargestellten geöffneten Zustand, in welchem das erste und das zweite Brühkammerelement 9, 10 voneinander beabstandet sind, um eine Zuführung der Portionskapsel 1 zu gewährleisten, und dem dargestellten geschlossenen Zustand, in welchem ein Zubereitungsvorgang zur Herstellung eines Getränks mittels der Portionskapsel 1 durchführbar ist. Im geschlossenen Zustand ist die Brühkammer 8 druckdicht verschlossen. Beim Überführen der Brühkammer 8 vom geöffneten Zustand in den abgebildeten geschlossenen Zustand wird die Deckelfolie 6 von den Einstechelementen 13a, 13b durchstochen, so dass Zubereitungsflüssigkeit, insbesondere heißes Brühwasser, durch die Zubereitungsflüssigkeitszuführung 14 unter Druck in den Hohlraum 100 der Portionskapsel 1 gelangt. Wenn die Portionskapsel 1 einen geschlossenen Kapselboden 3 aufweist, wird der Kapselboden 3 beim Schließen der Brühkammer 8 von einem als Ablaufdorn 16 ausgebildeten Perforationsmittel vorzugsweise perforiert, so dass eine Austrittsöffnung 20 im Kapselboden 3 erzeugt wird, durch welche die hergestellte Getränkeflüssigkeit aus der Portionskapsel 1 in Richtung des Getränkeablaufs 18 heraustreten kann. Zur Unterstützung der Ableitung der Getränkeflüssigkeit weist der Ablaufdorn 16 auf seiner Mantelfläche die Ablaufrillen 17 auf. In einer nicht dargestellten alternativen Ausführungsform weist der Kapselboden 3 eine Austrittsöffnung 20 auf, welche im Ausgangszustand mit einer Dichtfolie abgedichtet ist, um den Hohlraum 100 hermetisch dicht zu versiegeln. Vor dem Einlegen der Portionskapsel 1 in Brühkammer 8 wird die Dichtfolie von einem Benutzer von Hand abgezogen, so dass der Ablaufdorn 16 ungehindert durch die Austrittsöffnung 8 in die Portionskapsel 1 ragen kann. Alternativ ist aber auch denkbar, dass die Dichtfolie nicht manuell vom Benutzer entfernt wird, sondern von dem Ablaufdorn 16 beim Schließen der Brühkammer 8 perforiert wird. Die in den Hohlraum 100 unter einem Druck von bis zu 20 bar eintretende Zubereitungsflüssigkeit wechselwirkt innerhalb des Hohlraums 100 mit der Getränkesubstanz 101, wodurch sich das Getränk bildet. Das Getränk fließt anschließend durch das Filterelement 7 und durch die Austrittsöffnung 20 aus der Portionskapsel 1 aus. Vorteilhafterweise wird dabei die Bildung von Crema aufgrund des neuartigen Filterelements 7 wirksam vermieden, obwohl die Brühkammer 8 mit einem Druck von bis zu 20 bar betrieben wird.

**Figuren 3a und 3b** zeigen unterschiedliche Ausführungsformen des Filterelementes 7 der Portionskapsel 1 gemäß der in Figuren 1 und 2 dargestellten beispielhaften Ausführungsform.

Das in Figur 3a illustrierte Filterelement 7 weist nur eine einzige Filzschicht auf, welche in ihrem ersten Bereich 200 die erste Porengröße und in ihrem zweiten Bereich 201 die größere zweite Porengröße aufweist. Die unterschiedlichen Porengrößen werden beispielsweise dadurch erreicht, dass im ersten Bereich 200 Fasern mit einem ersten mittleren Faserdurchmesser zur Bildung des Filz verwendet werden, während im zweiten Bereich 201 Fasern mit einem zweiten mittleren Faserdurchmesser zur Bildung des Filz verwendet werden, wobei der zweite Faserdurchmesser größer als der erste Faserdurchmesser ist.

Das in Figur 3b illustrierte Filterelement 7 weist hingegen ein aus zwei separaten Filzschichten aufgebautes Filz auf. Der Filz umfasst eine erste Filzschicht 202 und eine zweite Filzschicht 203 auf. Die erste und die zweite Filzschicht 202, 203 liegen dabei lose aufeinander oder sind fest miteinander verbunden. Denkbar ist beispielsweise das die erste die zweite Filzschicht 202, 203 fest miteinander verwoben, verklebt oder verschweißt sind. Die erste Filzschicht 202 weist die erste Porengröße auf und stellt somit den ersten Bereich 200 dar, während die zweite Filzschicht 203 die größere zweite Porengröße aufweist und somit den zweiten Bereich 201 repräsentiert. Denkbar ist alternativ auch, dass die erste und zweite Filzschicht 202, 203 durch eine Zwischenschicht (nicht dargestellt) voneinander beabstandet sind.

### Bezugszeichenliste

- 1: Portionskapsel
- 2: Kapselkörper
- 3: Kapselboden
- 3a: Innenseite
- 3': Randbereich
- 4: Einfüllseite
- 5: Kragenrand
- 6: Deckelfolie
- 7: Filterelement
- 8: Brühkammer
- 9: Erstes Brühkammerelement
- 10: Zweites Brühkammerelement
- 11: Dichtung
- 12: Schließkolben
- 13a: Einstechelemente
- 13b: Einstechelemente
- 14: Zubereitungsflüssigkeitszuführung
- 15: Brühkammerglocke
- 16: Ablaufdorn
- 17: Ablaufrillen
- 18: Getränkeablauf
- 20: Austrittsöffnung
- 100: Hohlraum
- 101: Getränkesubstanz
- 200: Erster Bereich
- 201: Zweiter Bereich
- 202: Erste Filzschicht
- 203: Zweite Filzschicht

## Patentansprüche

1. Portionskapsel (1) zur Herstellung eines Getränks aufweisend einen Kapselkörper (2) mit einem Kapselboden (3) und einer Einfüllseite (4), wobei zwischen dem Kapselboden (3) und der Einfüllseite (4) ein Hohlraum (100) zur Aufnahme eines pulverförmigen, granulatförmigen oder flüssigen Getränkesubstrats (101), insbesondere ein Kaffee- und/oder Teegranulat, ausgebildet ist und wobei zwischen dem Getränkesubstrat (101) und dem Kapselboden (3) ein Filterelement (7) angeordnet ist, wobei das Filterelement (7) einen offenporiges Filz und/oder Vlies umfasst, **dadurch gekennzeichnet, dass** der Filz und/oder das Vlies in einem dem Getränkesubstrat (101) zugewandten ersten Bereich (200) eine mittlere erste Porengröße und in einem dem Kapselboden (3) zugewandten zweiten Bereich (201) eine mittlere zweite Porengröße aufweist, wobei die erste Porengröße kleiner als die zweite Porengröße ist.

2. Portionskapsel (1) nach Anspruch 1, wobei das Filterelement (7) eine Trägerschicht aufweist, wobei die Trägerschicht auf der der Getränkesubstanz (101) zugewandten Seite und auf der dem Kapselboden (3) zugewandten Seite eine unterschiedliche Verfilzung und/oder unterschiedliche Fasern und/oder Fasern mit unterschiedlichen Faserdicken und/oder unterschiedliche Wärmebehandlung aufweist.

3. Portionskapsel (1) nach Anspruch 1, wobei das Filterelement (7) eine erste Filzschicht (202) und eine zweite Filzschicht (203) aufweist, wobei die erste Filzschicht (202) auf einer dem Getränkesubstrat (101) zugewandten Seite des Filterelements (7) angeordnet ist und wobei die zweite Filzschicht (203) auf einer dem Kapselboden (3) zugewandten Seite des Filterelements (7) angeordnet ist, wobei die erste Filzschicht (202) im Mittel die erste Porengröße und die zweite Filzschicht (203) im Mittel die zweite Porengröße aufweist.

4. Portionskapsel (1) nach einem der vorhergehenden Ansprüche, wobei der Filz im ersten Bereich (200) und/oder die erste Filzschicht (201) aus Fasern mit einem durchschnittlichen ersten Faserdurchmesser gebildet ist und wobei der Filz im zweiten Bereich (201) und/oder die zweite Filzschicht (202) aus Fasern mit einem durchschnittlichen zweiten Faserdurchmesser gebildet ist, wobei der erste Faserdurchmesser kleiner als der zweite Faserdurchmesser ist.

5. Portionskapsel (1) nach Anspruch 4, wobei der Filz wenigstens eine dritte Filzschicht aufweist, welche bevorzugt zwischen der ersten und zweiten Filzschicht (201, 202) angeordnet ist, wobei die dritte Filzschicht besonders bevorzugt aus Fasern mit einem durchschnittlichen dritten Faserdurchmesser gebildet ist, wobei ganz besonders bevorzugt der dritte Faserdurchmesser größer als der erste Faserdurchmesser und/oder kleiner als der zweite Faserdurchmesser ist.

6. Verfahren zur Herstellung eines Getränkes, wobei im ersten Schritt eine Portionskapsel (1) nach einem der vorhergehenden Ansprüche bereitgestellt wird, wobei in einem zweiten Schritt die Portionskapsel (1) in eine Brühkammer (8) eingelegt wird und wobei in einem dritten Schritt zur Herstellung des Getränks eine Zubereitungsflüssigkeit mit einem Druck von bis zu 20 bar in die Portionskapsel (1) eingeleitet wird.

7. Verwendung einer Portionskapsel (1) nach einem der Ansprüche 1 bis 5 zur Herstellung eines Getränks, vorzugsweise zur Herstellung eines Kaffee- und/oder Teegetränks.

## Claims

1. A portion capsule (1) for producing a beverage, having a capsule body (2) with a capsule base (3) and a filling side (4), wherein a cavity (100) for accommodating a pulverulent, granular or liquid beverage base (101), in particular coffee or tea granules, is formed between the capsule base (3) and the filling side (4), and wherein a filter element (7) is arranged between the beverage base (101) and the capsule base (3), wherein the filter element (7) comprises an open-pore felt and/or nonwoven, **characterized in that** the felt and/or the nonwoven have/has an average first pore size in a first region (200) which faces the beverage base (101) and an average second pore size in a second region (201) which faces the capsule base (3), wherein the first pore size is smaller than the second pore size.

2. The portion capsule (1) as claimed in claim 1, wherein the filter element (7) has a support layer, wherein the support layer has a different entanglement and/or different fibers and/or fibers with different fiber thicknesses and/or different thermal treatment on that side which faces the beverage substance (101) and on that side which faces the capsule base (3).

3. The portion capsule (1) as claimed in claim 1, wherein the filter element (7) has a first felt layer (202) and a second felt layer (203), wherein the first felt layer (202) is arranged on a side of the filter element (7) which faces the beverage base (101), and wherein the second felt layer (203) is arranged on a side of the filter element (7) which faces the capsule base (3), wherein the first felt layer (202) has the first pore size on average and the second felt layer (203) has the second pore size on average.

4. The portion capsule (1) as claimed in one of the preceding claims, wherein the felt in the first region (200) and/or the first felt layer (201) are/is formed from fibers with an average first fiber diameter, and wherein the felt in the second region (201) and/or the second felt layer (202) are/is formed from fibers with an average second fiber diameter, wherein the first fiber diameter is smaller than the second fiber diameter.

5. The portion capsule (1) as claimed in claim 4, wherein the felt has at least a third felt layer which is preferably arranged between the first and second felt layers (201, 202), wherein the third felt layer is formed particularly preferably from fibers with an average third fiber diameter, wherein the third fiber diameter is very particularly preferably larger than the first fiber diameter and/or smaller than the second fiber diameter.

6. A method for producing a beverage, wherein a portion capsule (1) as claimed in one of the preceding claims is provided in a first step, wherein the portion capsule (1) is inserted into a brewing chamber (8) in a second step, and wherein a preparation liquid is introduced into the portion capsule (1) at a pressure of up to 20 bar in a third step, in order to produce the beverage.

7. The use of a portion capsule (1) as claimed in one of claims 1 to 5 for producing a beverage, preferably for producing a coffee and/or tea beverage.

## Revendications

1. Capsule dosette (1) permettant de préparer une boisson comportant un corps de capsule (2) avec un fond de capsule (3) et un côté de remplissage (4), un espace creux (100) permettant de loger un substrat de boisson (101) sous forme de poudre, de granulat ou de liquide, notamment un granulat de café et/ou de thé, étant réalisé entre le fond de capsule (3) et le côté de remplissage (4) et un élément de filtre (7) étant disposé entre le substrat de boisson (101) et le fond de capsule (3), l'élément de filtre (7) comprenant un feutre et/ou un non-tissé à pores ouverts, **caractérisé en ce que** le feutre et/ou le non-tissé comporte une première taille de pores moyenne dans une première zone (200) orientée vers le substrat de boisson (101) et une deuxième taille de pores moyenne dans une deuxième zone (201) orientée vers le fond de capsule (3), la première taille de pores étant inférieure à la deuxième taille de pores.

2. Capsule dosette (1) selon la revendication 1, l'élément de filtre (7) comportant une couche de support, la couche de support comportant sur le côté orienté vers la substance de boisson (101) et sur le côté orienté vers le fond de capsule (3) un feutrage différent et/ou des fibres différentes et/ou des fibres avec différentes épaisseurs de fibres et/ou un traitement thermique différent.

3. Capsule dosette (1) selon la revendication 1, l'élément de filtre (7) comportant une première couche de feutre (202) et une deuxième couche de feutre (203), la première couche de feutre (202) étant disposée sur un côté de l'élément de filtre (7) orienté vers le substrat de boisson (101) et la deuxième couche de feutre (203) étant disposée sur un côté de l'élément de filtre (7) orienté vers le fond de capsule (3), la première couche de feutre (202) comportant en moyenne la première taille de pores et la deuxième couche de feutre (203) comportant en moyenne la deuxième taille de pores.

4. Capsule dosette (1) selon l'une quelconque des revendications précédentes, le feutre présent dans la première zone (200) et/ou la première couche de feutre (201) étant réalisé à partir de fibres avec un premier diamètre de fibre moyen et le feutre présent dans la deuxième zone (201) et/ou la deuxième couche de feutre (202) étant réalisé à partir de fibres avec un deuxième diamètre de fibre moyen, le premier diamètre de fibre étant inférieur au deuxième diamètre de fibre.

5. Capsule dosette (1) selon la revendication 4, le feutre comportant au moins une troisième couche de feutre disposée de façon préférée entre la première et la deuxième couche de feutre (201, 202), la troisième couche de feutre étant constituée de façon particulièrement préférée à partir de fibres avec un troisième diamètre de fibre moyen, le troisième diamètre de fibre étant de façon tout particulièrement préférée supérieur au premier diamètre de fibre et/ou inférieur au deuxième diamètre de fibre.

6. Procédé de fabrication d'une boisson, une capsule dosette (1) selon l'une quelconque des revendications précédentes étant mise à disposition lors de la première étape, la capsule dosette (1) étant insérée dans une chambre de chauffe (8) lors d'une deuxième étape et un liquide de préparation étant amené à une pression pouvant atteindre 20 bar dans la capsule dosette (1) lors d'une troisième étape permettant de préparer la boisson.

7. Utilisation d'une capsule dosette (1) selon l'une quelconque des revendications 1 à 5 permettant de préparer une boisson, de préférence une boisson de type café et/ou thé.
